# EUROPEAN PATENT SPECIFICATION

(11) **EP 1 625 425 B1**
(45) Date of publication and mention of the grant of the patent: **03.01.2007**
(21) Application number: 04752781.7
(22) Date of filing: 19.05.2004
(51) Int. Cl.: G02B 1/04, C08F 2/48, C08F 2/50, G02C 7/02, G02C 7/04, G02B 27/00

(54) **APPARATUS AND METHOD FOR CURING OF UV-PROTECTED UV-CURABLE MONOMER AND POLYMER MIXTURES**
VORRICHTUNG UND VERFAHREN ZUM AUSHÄRTEN VON UV-HÄRTBAREN MONOMER- UND POLYMERMISCHUNGEN, DIE VOR UV-STRAHLUNG GESCHÜTZT SIND
APPAREIL ET PROCEDE POUR LE DURCISSEMENT DE MELANGES DE POLYMERES ET DE MONOMERES DURCISSANT AUX UV, PROTEGES CONTRE LES UV

(30) Priority: 21.05.2003 US 472669 P
(43) Date of publication of application: 15.02.2006
(73) Proprietor: OPHTHONIX, INC., San Diego, CA 92121 (US)
(72) Inventor: LAI, Shui, T., Encinitas, California 92024 (US)
(74) Representative: Winckels, Johannes Hubertus F.
(86) International application number: PCT/US2004/015828
(87) International publication number: WO 2004/106990

(56) References cited:
- US-A1- 2002 080 464
- US-A1- 2003 003 295

## Description

### Background of the Invention

### Field of the Invention

This invention relates generally to methods for curing UV-curable monomers and monomer/polymer mixtures that are in an environment in which they are protected from UV radiation.

### Description of the Related Art

U.S. Patent Application No. 2002-0080464 A1 discloses a wavefront aberrator that includes a polymerizable composition in a layer that is sandwiched between a pair of transparent plates. The refractive index of the polymerizable composition may be controlled as a function of position across the layer by controlling the degree of polymerization. Curing of the polymerizable composition may be made by exposure to light, such as ultraviolet (UV) light. The exposure to light may be varied across the surface of the polymerizable composition to create a particular and unique refractive index profile. After exposure to the light, the polymerizable composition layer typically contains both cured and uncured regions.

### Summary of the Invention

Since UV light is used to cure the polymerizable composition layer used in the wavefront aberrator described in U.S. Patent Application No. 2002-0080464 A1, practical embodiments have sandwiched the polymerizable composition between plates that are transparent to UV light. However, it has been discovered that the performance of the wavefront aberrator degrades to some extent with time, and particularly upon exposure to UV radiation for extended periods. It is believed that this degradation is due to the exposure of uncured regions within the polymerizable composition to the UV light, resulting in undesirable further polymerization of the polymerizable composition. The polymerizable composition may be cured between the transparent plates to form the wavefront aberrator, then the plates coated or treated to block further UV light from reaching the uncured regions of the polymerizable composition, but such coatings add cost and are not completely effective. Prior to this invention, it was believed that the plates must be UV-transparent in order to carry out the curing of the polymerizable composition in a commercially significant manner.

It has now been discovered that the plates need not be UV-transparent. In a preferred embodiment, the polymerizable composition is sandwiched between plates that strongly absorb UV light, but that are otherwise substantially transparent to optical radiation. The polymerizable composition contains a non linear optical (NLO) material that produces UV photons when activated by intense visible or near infrared (IR) radiation, thus initiating polymerization. The non-linear optical material exhibits sum frequency generation (SFG), combining two relatively low energy visible photons into a higher energy UV photon. Thus, a visible or near IR laser beam is preferably used to irradiate the NLO material, causing it to emit UV radiation that initiates the curing of a polymerizable composition. The non-linear material can be a polymerization initiator, one of the monomers or polymers in the layer, or an additive. Its function is to absorb visible or infrared photons and convert them to UV photons of the desired wavelength to initiate the polymerization process and thereby cure the polymerizable composition layer to create an optical element, preferably a wavefront aberrator.

A preferred embodiment provides a method for making an optical element, comprising: providing a polymerizable composition sandwiched between a first optically transparent UV-absorbing plate and a second optically transparent UV-absorbing plate, the polymerizable composition comprising a non-linear optical material; and irradiating the polymerizable composition to thereby polymerize at least a portion of the polymerizable composition to form an optical element.

Another preferred embodiment provides a method for making a wavefront aberrator, comprising: providing a thiol-ene composition sandwiched between a first optically transparent UV-absorbing plate and a second optically transparent UV-absorbing plate, the thiol-ene composition comprising a non-linear optical material; and irradiating the thiol-ene composition with an optical laser to thereby polymerize at least a portion of the thiol-ene composition to form a wavefront aberrator.

Another preferred embodiment provides an optical element comprising a polymerizable composition sandwiched between a first optically transparent UV-absorbing plate and a second optically transparent UV-absorbing plate, the polymerizable composition comprising a non-linear optical material.

Another preferred embodiment provides a system for making a wavefront aberrator, comprising: a polymerizable composition sandwiched between a first optically transparent UV-absorbing plate and a second optically transparent UV-absorbing plate, the polymerizable composition comprising a non-linear optical material; a laser source configured for irradiating the polymerizable composition; a controller operably connected to the laser source and configured to control the irradiating of the polymerizable composition to thereby form a wavefront aberrator.

These and other embodiments are described in greater detail below.

### Brief Description of the Drawings

Various aspects of the invention will be readily apparent from the following description and from the appended drawings (not to scale), which are meant to illustrate and not to limit the invention.

Figure 1 shows a schematic cross-section of an optical element that comprises two optically transparent, UV-absorbing plates and a polymerizable composition layer sandwiched between the plates.

Figure 2 shows a schematic cross-section of an optical element such as that shown in Figure 1, illustrating transmission of incident visible radiation by the UV-absorbing plates, and blocking of incident UV radiation by the UV-absorbing plates.

Figure 3 shows a schematic cross-section of a system for making an optical element such as that shown in Figure 1, illustrating preferred focusing of an incident radiation source.

### Detailed Description of the Preferred Embodiments

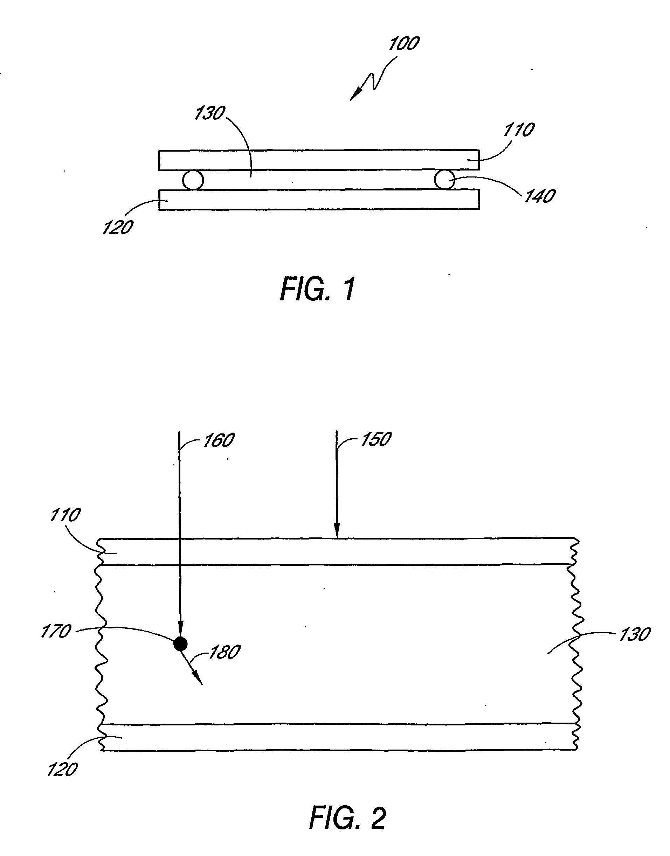

Preferred embodiments permit the plates to be made from strong UV-blocking materials and/or to have strong UV coatings. For example, Figure 1 shows a schematic cross-section of an optical element **100** that comprises two optically transparent plates **110, 120** and a polymerizable composition layer **130** sandwiched between the plates. Preferably, the optical element has a seal **140** to keep the monomer/polymer within a volume between the plates. Such a seal can be a tape with double sticky surfaces such that the tape defines a volume and also a thickness of the monomer layer. Another seal is also possible. For example, a seal can be formed by a narrow strip of cured polymer. The two optically transparent plates **110, 120** shown in Figure 1 are flat, but it will be understood that the plates may be curved and/or may have focusing power, e.g., the plates may be lenses.

The plates provide mechanical support and permit the optical element to be substantially transparent in the visible region of the electromagnetic spectrum. In a preferred embodiment, the optical element is a spectacle lenses. Currently, polycarbonate and CR-39 are among the most popular ophthalmic lens materials on the market. Polycarbonate is strongly UV absorptive, and has a transmission cutoff below about 380 nm. CR-39 has some UV transmission in the virgin material. However, the ophthalmic grade of CR-39 contains a UV absorbent that is added to block UV for the patients' benefit. Therefore, optical elements using polycarbonate or the ophthalmic grade of CR-39, when used as described in U.S. Patent Application No. 2002-0080464 A1, may suffer from the degradation problems noted above. Preferred embodiments overcome this difficulty and permit the plates to be made from UV-absorbing materials such as polycarbonate and UV blocking CR-39, as well as other UV blocking materials.

In preferred embodiments, the optical element is a spectacle lens, contact lens or intraocular lens, and may be referred to herein as a wavefront aberrator, or a wavefront aberrations corrector or compensator. The purpose of such a wavefront aberrator is to modify the wavefront profile of a transmitted light wave to form a corrected wavefront profile. An example of a corrected wavefront is a plane wave, but it can be any other predetermined profile, preferably one that is describable by a Zernike polynomial or combinations of Zernike polynomials. The wavefront aberrator **100** preferably comprises a polymerizable composition layer 130 sandwiched between two optically transparent plates **110, 120** as shown in Figure 1. In one embodiment, the optically transparent plates **110, 120** are made of a UV-absorbing material, preferably such that the fractional transmission (or the transmittance) for UV-A and UV-B bands is less than about 10⁻³, or 3 in Absorbance units, more preferably less than about 10⁻⁵, or 5 in Absorbance units. Preferably, the plates absorb UV radiation to such an extent that no appreciable change of the index of refraction profile of the layer **130** occurs when such an optical element is exposed to continuous daylight for a period of about one year. If the optical element is used outdoors or experiences UV exposure only 20% of the time, the useful lifetime may be about 5 years, or more with a UV blocking that is greater than 10⁻⁵.

Figure 2 illustrates a portion of the wavefront aberrator **100** (not to scale) in which the polymerizable composition layer **130** is sandwiched between the two transparent plates **110, 120.** A UV laser beam **150** impinging on the transparent plate **110** is heavily attenuated by the plate, so that little or no UV radiation reaches the polymerizable composition layer **130.** On the other hand, a visible or infrared laser beam **160** penetrates the same transparent plate **110** and reaches inside the polymerizable composition layer **130.** The polymerizable composition layer **130** comprises a non-linear optical material and the power density of the beam **160** is above a threshold level that permits non-linear conversion to occur at a site **160** inside the layer **130.** A two-photon process occurs at the site **170** as the non-linear optical material absorbs two visible photons and emits a UV photon **180** having an energy equal to the sum of the visible photons. The emitted UV photon **180** initiates polymerization in the polymerizable composition layer **130,** producing polymer near the site **170.** The UV photon **180** may initiate the polymerization directly, e.g., by activating a monomer, and/or may initiate the polymerization by activating an initiator (e.g., a photoinitiator) that, in turn, initiates the polymerization.

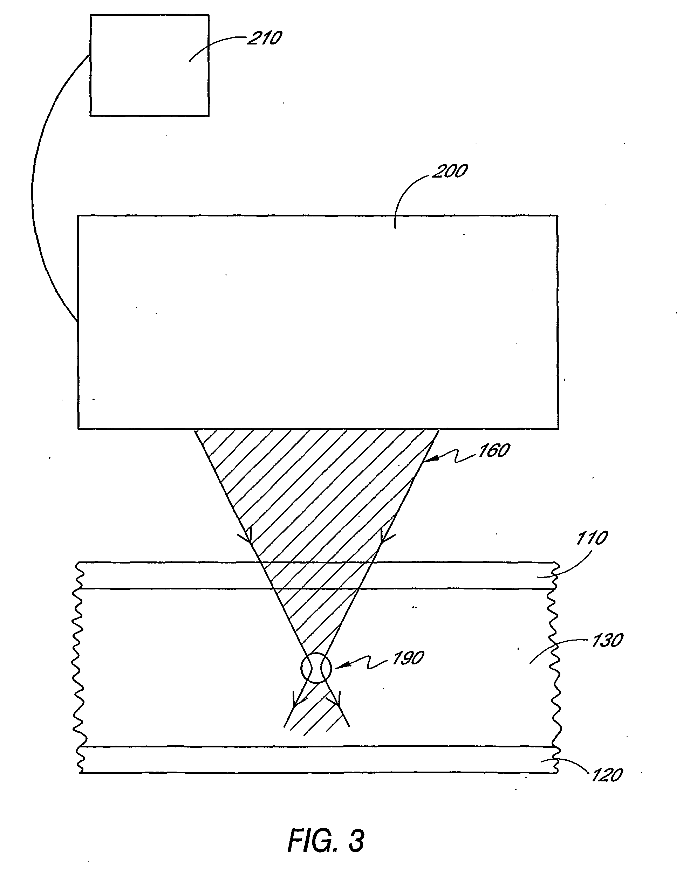

Figure 3 shows a preferred configuration of the system which focuses the laser beam **160.** A laser source **200** provides maximum beam power density at the beam focus **190,** or the beam waist. Two-photon absorption is a function of the quadratic power of the photon density. A preferred focusing configuration has a large cone angle so that photon density is highly localized at the beam waist. Since the two-photon process has a quadratic dependence on power density, the nonlinear process is confmed to the beam waist and very little non-linear activity is generated outside of the beam waist in this embodiment. In one embodiment, the laser source **200** can controllably move the beam focus throughout the region of the polymerizable composition layer **130.** A controller or control module **210** directs the operation of the laser source **200** according to a lens definition to create the desired correction in the wavefront aberrator **100.** Due to the highly localized nature of this non-linear process, these embodiments may be used to improve the inventions described in U.S. Application No. 10/265,517, filed Oct 3, 2002.

The polymerizable composition preferably comprises monomers and/or prepolymers and a non-linear optical material. The non-linear optical material may be a monomer, polymer, polymerization initiator (e.g., photoinitiator), a separate nonlinear optical additive, or a combination thereof. The polymerization initiator is preferably a photoinitiator such as ITX (isopropyl-9H-thioxanthen-9-one, typically a 97% mixture of the 2- and 4- isomers, commercially available from Aldrich Chemical Co.). Other photoinitiators such as benzoin methyl ether (BME), acylphosophine oxides (e.g., Irgacure 819, Ciba), diaryliodonium salts (e.g., CD-1012, Sartomer), triarylsulfonium salts (e.g., CD-1010 and CD-1012, Sartomer), and/or ferrocenium salts (e.g., Irgacure 261, Ciba) may also be used. Preferred polymerization initiators exhibit two photon UV absorption below 400 nm. A preferred photoinitiator system comprises a photoinitiator and an organic dye that is capable of absorbing visible light, such as 5,7-diiodo-3-butoxy-6-fluorene (H-Nu 470, Spectra Group Ltd.). The selection of non-linear optical material is dependent on the availability of laser wavelength to match the absorption peaks and the magnitude of the two-photon absorption cross sections associated with the two-photon process. For example, in the case of ITX, the preferred laser emits at 700 nm. Two such photons then interact with ITX at the energy level of 350 nm. The ITX then proceeds to polymerize the monomers and/or prepolymers. Preferably, the polymerizable composition is a thiol-ene composition that comprises thiol and ene ("thiol-ene") monomers and/or prepolymers.

The polymerizable composition may comprise a non-linear optical additive. Micro-crystalline non-linear optical crystals such as potassium titanyl phosphate (KTiOPO₄, "KTP"), potassium titanyl arsentate (KTiOAsO₄, "KTA"), beta barium borate (beta-BaB₂O₄, "BBO"), lithium triborate (LiB₃O₅, "LBO"), potassium pentaborate ("KB5"), urea, 3-methyl-4-nitropyridine-1-oxide (POM), L-arginine phosphate ("LAP"), deuterated L-arginine phosphate ("DLAP"), and ammonium dihydrogen phosphate (NH₄H₂PO₄, "ADP") can be added to the polymer mix. Other known nonlinear optical crystals and their suppliers can be found in Laser Focus World Buyers' Guide, chapter 8, pp. 596-604, Volume 38, 2002. Amorphous forms of the aforementioned nonlinear optical additives above can also be used. Preferably, the additives are in a powdered form, more preferably having an average particle size that is below the diffraction limit for visible light, to achieve optical clarity. Preferably, the nonlinear optical additive has an index of refraction that is about the same as the polymer medium to which it is added, to achieve optical clarity.

Polar atomic structures or molecular structures without a center of symmetry can also be used as nonlinearly active centers. Such atomic or molecular substructures can be attached to the polymer or monomers in the polymerizable composition by known chemical synthesis methods. Upon intense irradiation the nonlinear polarizability of such substructures causes them to generate second and higher order harmonics of the irradiating (fundamental) electromagnetic wave.

The laser source **200** can be a femtosecond pulsed laser beam or a nanosecond pulsed laser beam. For example, when **100** femtoseconds laser pulses are used, the beam is preferably focused to about 10 microns or less in diameter in the beam waist and the laser pulses preferably have an energy on the order of several hundred picojoules. On the other hand, when 10 nanoseconds laser pulses are used, the beam waist is preferably increased to about 100 microns, and the energy per pulse is about 100 millijoules. Lamp pumped or diode-pumped laser pulses may also be used. The higher pulse energy of such sources enables further increases in the beam waist. In that event, the curing efficiency is increased, however, the advantage of localized curing and its positional control in the Z-direction (direction of the incident beam) may be decreased somewhat, due to the increase of uniformity region of the waist over a longer distance in its propagating direction (increase of confocal parameter value of the focused beam). A typical femtosecond source is a Ti-sapphire laser, and a nanosecond laser source can be a repetitively Q-switched laser, such as Nd:YAG, Nd:YLF, or Alexandrite laser or other chromium based laser.

One exemplary application of the invention is to fabricate wavefront corrected spectacle lenses comprising an optical element such as that illustrated in Figure 1. The plates and the polymer resulting from the polymerization of the polymerizable composition are preferably optically clear, with little or no absorption in the visible spectrum. In a preferred embodiment, the low order aberrations including sphere, cylinder and axis (called the second order terms in Zernike polynomials designation) are at least partly corrected by incorporating refractive power (which may include astigmatism) in the plates. A typical commercial spectacle lens can be manufactured by grinding and polishing to provide refractive correction down to 0.25 diopters, but generally no better than 0.125 diopters due to cost limitations associated with current manufacturing technology. Preferred embodiments may be used to correct all or part of the residual aberrations, e.g., low order aberrations and/or higher order (third order and higher) aberrations. The transparent plates also provide for the protection of the polymerizable composition layer. The plates can be polycarbonate or CR-39 doped with strongly UV absorbing compounds, such that very little UV radiation passes through the plates to reach the polymerizable composition layer.

## Claims

1. A method for making an optical element, comprising:
providing a polymerizable composition sandwiched between a first optically transparent UV-absorbing plate and a second optically transparent UV-absorbing plate, the polymerizable composition comprising a non-linear optical material; and
irradiating the polymerizable composition to thereby polymerize at least a portion of the polymerizable composition to form an optical element.

2. The method of Claim 1 in which the first optically transparent UV-absorbing plate has a fractional transmission for UV-A and UV-B bands of less than about 10⁻³.

3. The method of Claim 1 in which the polymerizable composition comprises a photoinitiator.

4. The method of Claim 3 in which the photoinitiator exhibits two photon UV absorption below 400 nm.

5. The method of Claim 3 in which the photoinitiator is selected from the group consisting of isopropyl-9H-thioxanthen-9-one, benzoin methyl ether and acylphosophine oxide.

6. The method of Claim 1 in which the polymerizable composition comprises a thiol-ene composition.

7. The method of Claim 1 in which the non-linear optical material is selected from the group consisting of potassium titanyl phosphate, potassium titanyl arsentate, beta barium borate, lithium triborate, urea, and ammonium dihydrogen phosphate.

8. The method of Claim 1 in which irradiating the polymerizable composition comprises exposing the polymerizable composition to a visible or infrared laser beam.

9. The method of Claim 1 in which at least one of the first optically transparent UV-absorbing plate and the second optically transparent UV-absorbing plate is a lens.

10. The method of Claim 1 in which the optical element is a wavefront aberrator.

11. A method for making a wavefront aberrator, comprising:
providing a thiol-ene composition sandwiched between a first optically transparent UV-absorbing plate and a second optically transparent UV-absorbing plate, the thiol-ene composition comprising a non-linear optical material; and
irradiating the thiol-ene composition with an optical laser to thereby polymerize at least a portion of the thiol-ene composition to form a wavefront aberrator.

12. An optical element comprising a polymerizable composition sandwiched between a first optically transparent UV-absorbing plate and a second optically transparent UV-absorbing plate, the polymerizable composition comprising a non-linear optical material.

13. The optical element of Claim 12 in which the polymerizable composition comprises a photoinitiator.

14. The optical element of Claim 13 in which the photoinitiator exhibits two photon UV absorption below 400 nm.

15. The optical element of Claim 13 in which the photoinitiator is selected from the group consisting of isopropyl-9H-thioxanthen-9-one, benzoin methyl ether and acylphosophine oxide.

16. The optical element of Claim 12 in which the polymerizable composition comprises a thiol-ene composition.

17. The optical element of Claim 12 in which the non-linear optical material is selected from the group consisting of potassium titanyl phosphate, potassium titanyl arsentate, beta barium borate, lithium triborate, urea, and ammonium dihydrogen phosphate.

18. The optical element of Claim 12 in which at least one of the first optically transparent UV-absorbing plate and the second optically transparent UV-absorbing plate is a lens.

19. A system for making a wavefront aberrator, comprising:
a polymerizable composition sandwiched between a first optically transparent UV-absorbing plate and a second optically transparent UV-absorbing plate, the polymerizable composition comprising a non-linear optical material;
a laser source configured for irradiating the polymerizable composition;
a controller operably connected to the laser source and configured to control the irradiating of the polymerizable composition to thereby form a wavefront aberrator.

20. The system of Claim 19 in which at least one of the first optically transparent UV-absorbing plate and the second optically transparent UV-absorbing plate is a lens.

## Patentansprüche

1. Verfahren zur Herstellung eines optischen Elements, umfassend:
Bereitstellen einer polymerisierbaren Zusammensetzung, die sandwichartig zwischen einer ersten optisch transparenten UV-absorbierenden Platte und einer zweiten optisch transparenten UV-absorbierenden Platte eingeschlossen ist, wobei die polymerisierbare Zusammensetzung ein nichtlineares optisches Material umfasst; und
Bestrahlen der polymerisierbaren Zusammensetzung, so dass wenigstens ein Teil der polymerisierbaren Zusammensetzung polymerisiert wird und dabei ein optisches Element entsteht.

2. Verfahren gemäß Anspruch 1, wobei die erste optisch transparente UV-absorbierende Platte eine fraktionale Transmission für die UV-A- und die UV-B-Bande von weniger als etwa 10⁻³ hat.

3. Verfahren gemäß Anspruch 1, wobei die polymerisierbare Zusammensetzung einen Photoinitiator umfasst.

4. Verfahren gemäß Anspruch 3, wobei der Photoinitiator unter 400 nm eine Zwei-Photonen-UV-Absorption aufweist.

5. Verfahren gemäß Anspruch 3, wobei der Photoinitiator aus der Gruppe ausgewählt ist, die aus Isopropyl-9H-thioxanthen-9-on, Benzoinmethylether und Acylphosphinoxid besteht.

6. Verfahren gemäß Anspruch 1, wobei die polymerisierbare Zusammensetzung eine Thiol-En-Zusammensetzung umfasst.

7. Verfahren gemäß Anspruch 1, wobei das nichtlineare optische Material aus der Gruppe ausgewählt ist, die aus Kaliumtitanylphosphat, Kaliumtitanylarsenat, beta-Bariumborat, Lithiumtriborat, Harnstoff und Ammoniumdihydrogenphosphat besteht.

8. Verfahren gemäß Anspruch 1, wobei das Bestrahlen der polymerisierbaren Zusammensetzung das Einwirkenlassen eines sichtbaren oder infraroten Laserstrahls auf die polymerisierbare Zusammensetzung umfasst.

9. Verfahren gemäß Anspruch 1, wobei die erste optisch transparente UV-absorbierende Platte und/oder die zweite optisch transparente UV-absorbierende Platte eine Linse ist.

10. Verfahren gemäß Anspruch 1, wobei das optische Element ein Wellenfrontaberrator ist.

11. Verfahren zur Herstellung eines Wellenfrontaberrators, umfassend:
Bereitstellen einer Thiol-En-Zusammensetzung, die sandwichartig zwischen einer ersten optisch transparenten UV-absorbierenden Platte und einer zweiten optisch transparenten UV-absorbierenden Platte eingeschlossen ist, wobei die Thiol-En-Zusammensetzung ein nichtlineares optisches Material umfasst; und
Bestrahlen der Thiol-En-Zusammensetzung mit einem optischen Laser, so dass wenigstens ein Teil der Thiol-En-Zusammensetzung polymerisiert wird und dabei ein Wellenfrontaberrator entsteht.

12. Optisches Element, das eine polymerisierbare Zusammensetzung umfasst, die sandwichartig zwischen einer ersten optisch transparenten UV-absorbierenden Platte und einer zweiten optisch transparenten UV-absorbierenden Platte eingeschlossen ist, wobei die polymerisierbare Zusammensetzung ein nichtlineares optisches Material umfasst.

13. Optisches Element gemäß Anspruch 12, wobei die polymerisierbare Zusammensetzung einen Photoinitiator umfasst.

14. Optisches Element gemäß Anspruch 13, wobei der Photoinitiator unter 400 nm eine Zwei-Photonen-UV-Absorption aufweist.

15. Optisches Element gemäß Anspruch 13, wobei der Photoinitiator aus der Gruppe ausgewählt ist, die aus Isopropyl-9H-thioxanthen-9-on, Benzoinmethylether und Acylphosphinoxid besteht.

16. Optisches Element gemäß Anspruch 12, wobei die polymerisierbare Zusammensetzung eine Thiol-En-Zusammensetzung umfasst.

17. Optisches Element gemäß Anspruch 12, wobei das nichtlineare optische Material aus der Gruppe ausgewählt ist, die aus Kaliumtitanylphosphat, Kaliumtitanylarsenat, beta-Bariumborat, Lithiumtriborat, Harnstoff und Ammoniumdihydrogenphosphat besteht.

18. Optisches Element gemäß Anspruch 12, wobei die erste optisch transparente UV-absorbierende Platte und/oder die zweite optisch transparente UV-absorbierende Platte eine Linse ist.

19. System zur Herstellung eines Wellenfrontaberrators, umfassend:
eine polymerisierbare Zusammensetzung, die sandwichartig zwischen einer ersten optisch transparenten UV-absorbierenden Platte und einer zweiten optisch transparenten UV-absorbierenden Platte eingeschlossen ist, wobei die polymerisierbare Zusammensetzung ein nichtlineares optisches Material umfasst;
eine Laserquelle, die zum Bestrahlen der polymerisierbaren Zusammensetzung konfiguriert ist;
eine Steuereinheit, die funktionell mit der Laserquelle verbunden ist und so konfiguriert ist, dass sie die Bestrahlung der polymerisierbaren Zusammensetzung steuert, wobei ein Wellenfrontaberrator entsteht.

20. System gemäß Anspruch 19, wobei die erste optisch transparente UV-absorbierende Platte und/oder die zweite optisch transparente UV-absorbierende Platte eine Linse ist.

## Revendications

1. Procédé de fabrication d'un élément optique, comprenant :
la préparation d'une composition polymérisable prise en sandwich entre une première plaque absorbant les UV optiquement transparente et une deuxième plaque absorbant les UV optiquement transparente, la composition polymérisable comprenant un matériau optique non linéaire ; et
l'irradiation de la composition polymérisable afin de polymériser ainsi au moins une partie de la composition polymérisable de façon à former un élément optique.

2. Procédé selon la revendication 1, dans lequel la première plaque absorbant les UV optiquement transparente présente une transmission fractionnelle des bandes UV-A et UV-B inférieure à 10⁻³ environ.

3. Procédé selon la revendication 1, dans lequel la composition polymérisable comprend un amorceur de photopolymérisation.

4. Procédé selon la revendication 3, dans lequel l'amorceur de photopolymérisation présente deux absorptions UV de photons en dessous de 400 nm.

5. Procédé selon la revendication 3, dans lequel l'amorceur de photopolymérisation est choisi dans le groupe constitué par l'isopropyl-9H-thioxanthén-9-one, l'éther méthylique de benzoïne et l'oxyde d'acylphosphine.

6. Procédé selon la revendication 1, dans lequel la composition polymérisable comprend une composition thiol-ène.

7. Procédé selon la revendication 1, dans lequel le matériau optique non linéaire est choisi dans le groupe constitué par le potassium titanyl phosphate, le potassium titanyl arséniate, le borate de baryum bêta, le triborate de lithium, l'urée et le dihydrogénophosphate d'ammonium.

8. Procédé selon la revendication 1, dans lequel l'irradiation de la composition polymérisable comprend l'exposition de la composition polymérisable à un faisceau laser visible ou infrarouge.

9. Procédé selon la revendication 1, dans lequel l'une au moins de la première plaque absorbant les UV optiquement transparente et de la deuxième plaque absorbant les UV optiquement transparente est une lentille.

10. Procédé selon la revendication 1, dans lequel l'élément optique est un aberrateur de front d'onde.

11. Procédé de fabrication d'un aberrateur de front d'onde, comprenant :
la préparation d'une composition thiol-ène prise en sandwich entre une première plaque absorbant les UV optiquement transparente et une deuxième plaque absorbant les UV optiquement transparente, la composition thiol-ène comprenant un matériau optique non linéaire ; et
l'irradiation de la composition thiol-ène au moyen d'un laser optique afin de polymériser ainsi au moins une partie de la composition thiol-ène de façon à former un aberrateur de front d'onde.

12. Elément optique comprenant une composition polymérisable prise en sandwich entre une première plaque absorbant les UV optiquement transparente et une deuxième plaque absorbant les UV optiquement transparente, la composition polymérisable comprenant un matériau optique non linéaire.

13. Elément optique selon la revendication 12, dans lequel la composition polymérisable comprend un amorceur de photopolymérisation.

14. Elément optique selon la revendication 13, dans lequel l'amorceur de photopolymérisation présente deux absorptions UV de photons en dessous de 400 nm.

15. Elément optique selon la revendication 13, dans lequel l'amorceur de photopolymérisation est choisi dans le groupe constitué par l'isopropyl-9H-thioxanthén-9-one, l'éther méthylique de benzoïne et l'oxyde d'acylphosphine.

16. Elément optique selon la revendication 12, dans lequel la composition polymérisable comprend une composition thiol-ène.

17. Elément optique selon la revendication 12, dans lequel le matériau optique non linéaire est choisi dans le groupe constitué par le potassium titanyl phosphate, le potassium titanyl arséniate, le borate de baryum bêta, le triborate de lithium, l'urée et le dihydrogénophosphate d'ammonium.

18. Elément optique selon la revendication 12, dans lequel l'une au moins de la première plaque absorbant les UV optiquement transparente et de la deuxième plaque absorbant les UV optiquement transparente est une lentille.

19. Système de fabrication d'un aberrateur de front d'onde, comprenant :
une composition polymérisable prise en sandwich entre une première plaque absorbant les UV optiquement transparente et une deuxième plaque absorbant les UV optiquement transparente, la composition polymérisable comprenant un matériau optique non linéaire ;
une source laser configurée pour irradier la composition polymérisable ;
un contrôleur opérationnellement connecté à la source laser et configuré pour contrôler l'irradiation de la composition polymérisable afin de former ainsi un aberrateur de front d'onde.

20. Système selon la revendication 19, dans lequel l'une au moins de la première plaque absorbant les UV optiquement transparente et de la deuxième plaque absorbant les UV optiquement transparente est une lentille.
